# EUROPEAN PATENT SPECIFICATION

(11) **EP 3 981 612 B1**
(45) Date of publication and mention of the grant of the patent: **05.11.2025**
(21) Application number: 21198957.9
(22) Date of filing: 24.09.2021
(51) Int. Cl.: B60C 1/00, C08K 5/3415, C08L 7/00, B60C 9/00, B60C 9/20, C08L 9/00, C08L 9/06, B60C 9/02

(54) **ARTICLE AND RUBBER COMPOSITION CONTAINING BISMALEIMIDE**
ARTIKEL UND KAUTSCHUKZUSAMMENSETZUNG MIT BISMALEIMID
ARTICLE ET COMPOSITION DE CAOUTCHOUC CONTENANT DU BISMALÉIMIDE

(30) Priority: 28.09.2020 US 202017034382
(43) Date of publication of application: 13.04.2022
(73) Proprietor: The Goodyear Tire & Rubber Company, Akron, OH 44316 (US)
(72) Inventor: SANDSTROM, Paul Harry, Cuyahoga Falls, 44223 (US)
(74) Representative: Kutsch, Bernd

(56) References cited:
- EP-A1- 1 801 150
- EP-A2- 1 205 315
- US-A- 4 818 601

## Description

### Background of the Invention

A tire is a composite of several components each serving a specific and unique function yet all synergistically functioning to produce the desired performance. In several tire components, an in-situ resin may be included in a rubber composition to impart desirable properties to the rubber composition, including hardness, tear strength, and adhesion to reinforcement. Alternatively, or in combination with resins, cobalt salts may be used to promote adhesion of the rubber to steel cords. Unfortunately, cobalt and certain resins are undesirable from an environmental standpoint. Therefore, there exists a need for cobalt and resin replacement without sacrificing the beneficial properties resulting from its use.

US 4,818,601 describes a rubber-cord composite body comprising a reinforcing cord and a rubber composition. The rubber composition comprises 80 phr of natural rubber, 20 phr of polybutadiene rubber, 42 phr of carbon black, and 3 phr of N, N'-m-phenylene bismaleimide.

EP 1 205 315 A2 describes a tire with a rubber-steel cord composite. The rubber composition comprises 100 phr of natural rubber, 60 phr of carbon black, and 2 phr of bismaleimide.

EP 1 801 150 A1 describes a tire having a rubber component comprising N, N'-m-phenylene bismaleimide.

### Summary of the Invention

The invention relates to an article of manufacture in accordance with claim 1.

Dependent claims refer to preferred embodiments of the invention.

In a preferred aspect of the invention, an article of manufacture is provided having at least one cord-reinforced rubber component comprising:
(A) a reinforcing cord; and
(B) a vulcanizable rubber composition contacting the cord, the rubber composition comprising:
   (1) from 70 to 100 phr of at least one polyisoprene rubber selected from the group consisting of natural rubber or synthetic polyisoprene;
   (2) from 0 to 30 phr of at least one additional rubber selected from the group consisting of polybutadiene and styrene-butadiene rubber;
   (3) from 20 to 80 phr of carbon black;
   (4) from 2 to 10 phr of silica;
   (5) from 0 to 1 phr of a cobalt salt; and
   (6) from 0.5 to 5 phr of N, N'-m-phenylene bismaleimide;
wherein the rubber composition excludes resins and silane coupling agents.

In a preferred aspect of the invention, the rubber composition contacting the cord comprises at least 90 phr or at least 95 phr or 100 phr of natural rubber or synthetic polyisoprene.

In a preferred aspect of the invention, the rubber composition contacting the cord comprises 5 phr to 30 phr, preferably 10 to 25 phr or 15 to 25 phr, of said at least one additional rubber selected from the group consisting of polybutadiene and styrene-butadiene rubber.

In one embodiment, the rubber composition contacting the cord comprises 6 to 10 phr of silica.

In a preferred aspect of the invention, the rubber composition contacting the cord comprises 35 to 70 phr or carbon black.

### Detailed Disclosure of Example Embodiments of the Invention

There is disclosed an article of manufacture having at least one cord-reinforced rubber component comprising
(A) a reinforcing cord; and
(B) a vulcanizable rubber composition contacting the cord, the rubber composition comprising:
   (1) from 70 to 100 phr of at least one polyisoprene rubber selected from the group consisting of natural rubber or synthetic polyisoprene;
   (2) from 0 to 30 phr of at least one additional rubber selected from the group consisting of polybutadiene and styrene-butadiene rubber;
   (3) from 20 to 80 phr of carbon black;
   (4) from 2 to 10 phr of silica;
   (5) from 0 to 1 phr of a cobalt salt; and
   (6) from 0.5 to 5 phr of N, N'-m-phenylene bismaleimide;
wherein the rubber composition excludes resins and silane coupling agents.

The present invention relates to an article of manufacture, specifically a pneumatic tire, but is not so limited. Pneumatic tire means a laminated mechanical device of generally toroidal shape (usually an open torus) having beads and a tread and made of rubber, chemicals, fabric and steel or other materials. The present invention relates to both bias and radial-ply tires. Preferably, the present invention is a radial-ply tire. Radial-ply tire means a belted or circumferentially-restricted pneumatic tire in which the carcass ply cords which extend from bead to bead are laid at cord angles between 65° and 90° with respect to the equatorial plane of the tire.

Reinforcing cords useful in the article of manufacture include both steel and polymeric cords. The reinforcing cord is constructed of any of the various reinforcement materials commonly used in tires. In one embodiment, the cord includes steel and polymeric cords.

Polymeric cords may include any of the various textile cords as are known in the art including cords constructed from polyamide, polyester, polyketone, rayon, and polyaramid.

The steel cord used according to a preferred embodiment of the present invention may be steel, tin-plated steel or brass-plated steel. Preferably, the metallic cord is brass plated steel. The steel substrate may be derived from those known to those skilled in the art. For example, the steel used for wire may be conventional tire cord rod including AISI grades 1070, 1080, 1090 and 1095. The steel may additionally contain varying levels of carbon and microalloying elements such as Cr, B, Ni and Co.

The term "cord" means one or more of a reinforcing elements, formed by one or more filaments or wires which may or may not be twisted or otherwise formed. Therefore, cords using the present invention may comprise from one (monofilament) to multiple filaments.

The cord may be used in a belt structure, bead or carcass of a tire. "Belt structure" means at least two layers of plies of parallel cords, underlying the tread, unanchored to the bead and preferably having both left and right cord angles in the range from 17 to 27 degrees with respect to the equatorial plane (EP) of the tire. "Carcass" means the tire structure apart from the belt structure, the tread and the undertread but including the beads. The carcass ply includes reinforcing cords embedded in an elastomeric substance and that these components are considered to be a single entry. "Bead" means that part of the tire comprising an annular tensile member wrapped by the carcass ply and shaped, with or without other reinforcement elements such as flippers, chippers, apexes, toe guards, and chafers, to fit the design rim.

The rubber composition for use in the cord-reinforced component includes from 70 to 100 phr of a polyisoprene rubber. Suitable polyisoprene rubbers include natural rubber and synthetic polyisoprene. As an additional rubber, the rubber composition may include from 0 to 30 phr of at least one of styrene-butadiene rubber and polybutadiene, preferably cis-polybutadiene having a cis-content of at least 90 percent.

The rubber composition includes from 0 to 10 phr of a processing oil. In one embodiment, the rubber composition excludes a processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, and low PCA oils, such as MES, TDAE, and heavy naphthenic oils, vegetable oils such as sunflower, soybean, and safflower oils, and fatty acid monoesters.

The rubber composition includes from 0.5 to 5 phr of N, N'-m-phenylene bismaleimide. In one embodiment, the rubber composition is exclusive of N, N'-m-xylylene biscitraconimide.

The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials, and such terms are well known to those having skill in the rubber mixing or rubber compounding art.

The vulcanizable rubber composition includes from 20 to 80 phr of a carbon black, alternatively from 30 to 70 phr of carbon black. Commonly employed carbon blacks can be used as a conventional filler. Representative examples of such carbon blacks include N110, N121, N134, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

The vulcanizable rubber composition also includes from 2 to 10 phr of silica, alternatively from 3 to 8 phr of silica.

The commonly employed siliceous pigments which may be used in the rubber compound include conventional pyrogenic and precipitated siliceous pigments (silica), although precipitated silicas are preferred. The conventional siliceous pigments preferably employed in this invention are precipitated silicas such as, for example, those obtained by the acidification of a soluble silicate, e.g., sodium silicate. Such conventional silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, Page 304 (1930). The conventional silica may also be typically characterized by having a dibutylphthalate (DBP) absorption value in a range of 100 to 400, and more usually 150 to 300. The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as silicas commercially available from PPG Industries under the Hi-Sil trademark with designations 210, 243 and 315; silicas available from Solvay, with, for example, designations of Z1165MP and Z165GR; and silicas available from Evonik with, for example, designations VN2 and VN3.

Uniquely, even though the rubber composition includes silica, the rubber composition is exclusive of silane coupling agents, such as alkylsilanes, aminosilanes, mercaptosilanes, blocked mercaptosilanes, alkoxysilanes, and polysulfide silanes such as bis(triethoxysilylpropyl) tetrasulfide and bis(triethoxysilylpropyl)d disulfide.

The rubber compound may contain any of the cobalt materials known in the art to further promote the adhesion of rubber to metal. One advantage of the present invention is the reduction and possible elimination of cobalt compounds. However, it may be desirable to have some amounts that are present. Thus, suitable cobalt materials which may be employed include cobalt salts of fatty acids such as stearic, palmitic, oleic, linoleic and the like; cobalt salts of aliphatic or alicyclic carboxylic acids having from 6 to 30 carbon atoms, such as cobalt neodecanoate; cobalt chloride, cobalt naphthenate; cobalt carboxylate and an organo-cobalt-boron complex commercially available under the designation Manobond C from Wyrough and Loser, Inc, Trenton, New Jersey. Manobond C is believed to have the structure: 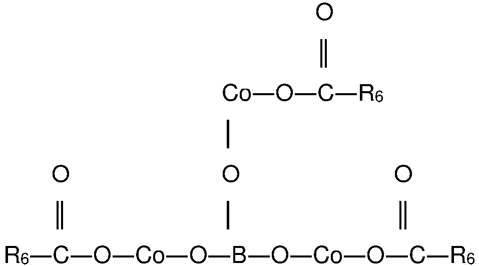 in which R₆ is an alkyl group having from 9 to 12 carbon atoms.

Amounts of cobalt compound which may be employed depend upon the specific nature of the cobalt material selected, particularly the amount of cobalt metal present in the compound. In one embodiment, the amount of the cobalt material may range from 0 to 1 phr. In another embodiment, the amount of cobalt compound may range from 0 to 0.5 phr. In one embodiment, cobalt is excluded from the rubber composition.

In one embodiment, the rubber composition excludes cobalt. However, as is known in the art some residual amount of cobalt may be present in mixing equipment and consequently appear in rubber compositions. The rubber composition is then said to be essentially free of cobalt. By essentially free, it is meant that the amount of cobalt, if any, is very low and is present only due to contamination by process equipment and normal handling in the material procurement process. In one embodiment, the amount of cobalt is less than 0.1 phr. In one embodiment, the amount of cobalt is less than 0.05 phr. In one embodiment, the of cobalt is less than 0.01 phr.

It is readily understood by those having skill in the art that the rubber composition would be compounded by methods generally known in the rubber compounding art, such as mixing the various sulfur-vulcanizable constituent rubbers with various commonly used additive materials.

The vulcanizable rubber composition includes a sulfur donor. Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 2 to 10 phr, with a range of from 3 to 8 phr being preferred.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 2, preferably 0.75 to 1.5, phr. In another embodiment, combinations of a primary and a secondary accelerator might be used with the secondary accelerator being used in smaller amounts, such as from 0 to 0.5 phr, in order to activate and to improve the properties of the vulcanizate. Preferably, the primary accelerator is a sulfenamide. Preferably, the second accelerator is zinc dimethyl dithiocarbamate.

Other curatives include zinc oxide in an amount ranging from 1 to 12 phr, alternatively 2 to 8 phr.

Uniquely, resins such as in situ (i.e., reactive in situ) resins and other non-reactive resins are excluded from the vulcanizable rubber composition. Such in-situ resins are typically used in the rubber composition and involve the reaction of a methylene acceptor and a methylene donor.

Such excluded methylene acceptor is (but are not limited to) resorcinol, resorcinolic derivatives, monohydric phenols and their derivatives, dihydric phenols and their derivatives, polyhydric phenols and their derivatives, unmodified phenol novolak resins, modified phenol novolak resin, phenol formaldehyde resin, resorcinol novolak resins and mixtures thereof.

Such excluded methylene donors are (but not limited to) hexamethylenetetramine, hexamethoxymethylmelamine (HMMM), hexaethoxymethylmelamine, imino-methoxymethylmelamine, imino-isobutoxymethylmelamine, lauryloxymethylpyridinium chloride, ethoxymethylpyridinium chloride trioxan hexamethoxymethylmelamine, and N-substituted oxymethylmelamines.

Such non-reactive resins excluded from the rubber composition are for instance coumarone-indene resin, petroleum hydrocarbon resin, terpene polymers, styrene-alphamethylstyrene resins, terpene phenol resin, dicyclopentiadiene resin, C5 resins, C9 resins, C5/C9 resins, rosin derived resins and copolymers and/or mixtures thereof.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a cord-reinforced component of a pneumatic tire. Alternatively, the cord-reinforced rubber component may be in an article of manufacture including pneumatic tires, power transmission belts, hoses, tracks, air sleeves, or conveyor belts.

The cord is calendered or otherwise contacted with the vulcanizable rubber composition to form the tire component using procedures as are known in the art. In various embodiments, the tire component may be a belt, carcass ply, apex, bead, chipper, flipper, or any other component including a cord reinforcement as are known in the art.

The pneumatic tire of the present invention may be a race tire, passenger tire, aircraft tire, agricultural, earthmover, off-the-road or truck tire. Preferably, the tire is a passenger or truck tire. The tire may also be a radial or bias, with a radial being preferred.

Vulcanization of the pneumatic tire of the present invention is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air.

The prepared tire of this invention is conventionally shaped and cured by methods known to those having skill in such art.

The invention may be better understood by reference to the following examples in which the parts and percentages are by weight unless otherwise indicated.

### Example 1

In this example, the effect of replacing a cobalt salt and in-situ resin with a m-phenylene bismaleimide is demonstrated in wirecoat rubber compounds. Three experimental rubber compounds were prepared in a lab Banbury mixer as indicated in Table 1, with all compounds containing otherwise identical amounts of additives in conventional amounts. Physical properties of the compounds were evaluated as indicated in Table 2.

**Table 1**

| Sample No. | 1 | 2 | 3 |
|---|---|---|---|
| Natural Rubber | 90 | 90 | 90 |
| Synthetic Polyisoprene | 10 | 10 | 10 |
| Carbon Black | 57 | 57 | 63 |
| Silica | 8.83 | 8.83 | 8.83 |
| Resorcinol | 4 | 4 | 0 |
| HMMM | 4.17 | 4.17 | 0 |
| N, N'-m-phenylene bismaleimide | 0 | 0 | 2 |
| Sulfur | 5 | 5 | 6.5 |
| Sulfenamide | 0.75 | 0.75 | 1.3 |
| Cobalt Salt | 0.5 | 0 | 0 |

**Table 2**

| Sample No. | 1 | 2 | 3 |
|---|---|---|---|
| Stress-strain ATS (cured 18 minutes at 150°C; test at 23°C) | | | |
| Tensile strength (MPa) | 20.4 | 20.8 | 21.1 |
| Elongation at break (%) | 387 | 421 | 395 |
| 100% modulus (MPa) | 4.7 | 4.1 | 4.4 |
| 300% modulus (MPa) | 15.8 | 14.6 | 16.5 |
| Rebound, 23°C (%) | 41 | 41 | 42 |
| Rebound, 100°C (%) | 54 | 53 | 57 |

| Tear strength² (cured 25 minutes at 150 °C; test at 23 °C) | | | |
|---|---|---|---|
| Tear strength, N/10 mm | 231 | 299 | 263 |

| Processing | | | |
|---|---|---|---|
| Uncured G' | 206 | 214 | 200 |

| Stiffness | | | |
|---|---|---|---|
| G'@ 10% strain, 90°C, ARES | 3653 | 3167 | 3679 |

| Hysteresis | | | |
|---|---|---|---|
| Tan D @ 90°C, 10% Strain | 0.201 | 0.206 | 0.139 |

| Wire Adhesion³ (cured 35 minutes at 155°C; test at 23 °C) | | | |
|---|---|---|---|
| No aging, N | 666 | 619 | 686 |
| Rubber coverage, % | 90 | 75 | 80 |
| Aged 10 days in H₂O at 90 °C, N | 671 | 575 | 779 |
| Rubber coverage, % | 75 | 55 | 85 |
| Aged 20 days in H₂O at 90 °C, N | 767 | 418 | 879 |
| Rubber coverage, % | 95 | 10 | 80 |
| Aged 10 days in N₂ at 120 °C, N | 604 | 649 | 798 |
| Rubber coverage, % | 85 | 95 | 95 |

| | | | |
|---|---|---|---|
| ² The hot tear resistance property (tear strength) determination is conducted for peel adhesion of a sample to another sample of the same material. A description may be found in ASTM D4393 except that a sample width of 2.5 cm is used and a clear Mylar plastic film window of a 5 mm width is inserted between the two test samples. It is an interfacial adhesion measurement (pulling force expressed in N/mm units) between two layers of the same tested compound which have been co-cured together with the Mylar film window therebetween. The purpose of the Mylar film window is to delimit the width of the pealed area. ³ Standard wire and textile cord adhesion tests (SWAT) were conducted by embedding a single cord in the respective rubber compositions with an embedment length of 10mm. The rubber articles were then cured as indicated. The cord in these rubber compositions were then subjected to a pull-out test, according to ASTM Standard D2229-73 with a pulling speed of 12.5 mm/min. | | | |

### Example 2

In this example, the effect of replacing a cobalt salt and in-situ resin with a m-phenylene bismaleimide is demonstrated in plycoat rubber compounds. Two experimental rubber compounds were prepared in a lab Banbury mixer as indicated in Table 3, with all compounds containing otherwise identical amounts of additives in conventional amounts. Physical properties of the compounds were evaluated as indicated in Table 4.

**Table 3**

| Sample No. | 4 | 5 |
|---|---|---|
| Styrene-Butadiene Rubber | 20 | 20 |
| Natural Rubber | 80 | 80 |
| Carbon Black | 43 | 43 |
| Reactive Phenol-Formaldehyde Resin | 1 | 0 |
| HMMM | 1.8 | 0 |
| N, N'-m-phenylene bismaleimide | 0 | 1 |
| Non-reactive tackifier resin | 1 | 1 |
| Oil | 10 | 5 |
| Antidegradant | 1 | 2 |
| Zinc Oxide | 2 | 2 |
| Sulfur | 3 | 3 |
| Sulfenamide | 1.4 | 1.4 |

**Table 4**

| Sample No. | 4 | 5 |
|---|---|---|
| Stress-strain ATS (cured 18 minutes at 150°C; test at 23 °C) | | |
| Tensile strength (MPa) | 17.2 | 20.7 |
| Elongation at break (%) | 496 | 509 |
| 100% modulus (MPa) | 1.81 | 2.09 |
| 300% modulus (MPa) | 8.44 | 10.0 |
| Rebound, 23°C (%) | 50 | 49 |
| Rebound, 100°C (%) | 61 | 63 |

| Tear strength² (cured 25 minutes at 150 °C; test at 23 °C) | | |
|---|---|---|
| Original, N | 103 | 99 |
| Aged 14 days at 70 C in air | 68 | 55 |
| Processing | | |
| Uncured G' | 183 | 197 |

| Stiffness | | |
|---|---|---|
| G'@ 10% strain, 90°C, ARES | 1328 | 1438 |

| Hysteresis | | |
|---|---|---|
| Tan D @ 90°C, 10% Strain | 0.15 | 0.15 |

| Cord Adhesion (cured 35 minutes at 155°C; test at 23 °C) | | |
|---|---|---|
| Seat Adhesion to PE, N | 148 | 186 |
| Rubber coverage, % | 55 | 70 |
| Hot U Adhesion (ASTM Test No. D2138), | N 177 | 203 |
| Rubber coverage, % | 90 | 85 |
| Fabric Adhesion (ASTM D413), N | 6.8 | 11.4 |
| Rubber coverage, % | 75 | 85 |

| | | |
|---|---|---|
| ² The hot tear resistance property (tear strength) determination is conducted for peel adhesion of a sample to another sample of the same material. A description may be found in ASTM D4393 except that a sample width of 2.5 cm is used, and a clear Mylar plastic film window of a 5 mm width is inserted between the two test samples. It is an interfacial adhesion measurement (pulling force expressed in N/mm units) between two layers of the same tested compound which have been co-cured together with the Mylar film window therebetween. The purpose of the Mylar film window is to delimit the width of the pealed area. | | |

While the embodiments described herein have been directed to a rubber composition and a pneumatic tire, the present invention is not so limited. The rubber composition may also be used in various other articles of manufacture, including power transmission belts, hoses, tracks, tires, air sleeves, and conveyor belts.

## Claims

1. An article of manufacture having at least one cord-reinforced rubber component, the article comprising:
(A) a reinforcing cord; and
(B) a rubber composition contacting the cord, the rubber composition comprising:
(1) from 70 to 100 phr of at least one polyisoprene rubber selected from the group consisting of natural rubber or synthetic polyisoprene;
(2) from 0 to 30 phr of at least one additional rubber selected from the group consisting of polybutadiene and styrene-butadiene rubber;
(3) from 20 to 80 phr of carbon black;
(4) from 2 to 10 phr of silica;
(5) from 0 to 1 phr of a cobalt salt; and
(6) from 0.5 to 5 phr of N, N'-m-phenylene bismaleimide;
wherein the rubber composition if free of resins and silane coupling agents.

2. The article of manufacture of claim 1, wherein the rubber composition is free of cobalt salt.

3. The article of manufacture of claim 1 or 2, wherein the rubber composition further comprises a curative package comprising from 2 to 10 phr of sulfur, from 1 to 12 phr of zinc oxide, from 0.5 to 2 phr of a sulfenamide accelerator, and from 0 to 0.5 phr of zinc dimethyl dithiocarbamate.

4. The article of manufacture of at least one of the previous claims, wherein the rubber composition contacting the cord comprises at least 90 phr or at least 95 phr or 100 phr of natural rubber or synthetic polyisoprene.

5. The article of manufacture of at least one of the previous claims, wherein the rubber composition contacting the cord comprises 5 phr to 30 phr, preferably 10 to 25 phr or 15 to 25 phr, of said at least one additional rubber selected from the group consisting of polybutadiene and styrene-butadiene rubber.

6. The article of manufacture of at least one of the previous claims 1 to 5, wherein the rubber composition contacting the cord comprises 6 to 10 phr of silica.

7. The article of manufacture of at least one of the previous claims, wherein the rubber composition contacting the cord comprises 35 to 70 phr of carbon black.

8. The article of manufacture of at least one of the previous claims, wherein the rubber composition is free of N, N'-m-xylylene biscitraconimide.

9. The article of manufacture of at least one of the previous claims, wherein the reinforcement cord comprises at least one cord selected from the group consisting of steel cords and polymeric cords.

10. The article of manufacture of at least one of the previous claims, wherein the reinforcement cord is a steel cord.

11. The article of manufacture of at least one of the previous claims, wherein the reinforcement cord comprises at least one polymeric cord selected from the group consisting of polyester cords, polyamide cords, polyaramid cords, polyketone cords, and rayon cords.

12. The article of manufacture of at least one of the previous claims, wherein the article is a pneumatic tire and the cord-reinforced rubber component is a carcass ply.

13. The article of manufacture of at least one of claims 1 to 11, wherein the article is a pneumatic tire and the cord-reinforced rubber component is a belt.

14. The article of manufacture of at least one of claims 1 to 11, in the form of a pneumatic tire, a power transmission belt, a hose, a track, an air sleeve, or a conveyor belt.

## Patentansprüche

1. Erzeugnis, das mindestens eine mit Korden verstärkte Kautschukkomponente aufweist, wobei das Erzeugnis das Folgende umfasst:
(A) ein Verstärkungskord; und
(B) eine Kautschukzusammensetzung, die mit dem Kord in Kontakt kommt; wobei die Kautschukzusammensetzung das Folgende umfasst:
(1) von 70 bis 100 ThK mindestens eines Polyisoprenkautschuks, der aus der Gruppe ausgewählt ist, die aus Naturkautschuk oder synthetischem Polyisopren besteht;
(2) von 0 bis 30 ThK mindestens eines zusätzlichen Kautschuks, der aus der Gruppe ausgewählt ist, die aus Polybutadienkautschuk und Styrol-Butadien-Kautschuk besteht;
(3) von 20 bis 80 ThK Ruß;
(4) von 2 bis 10 ThK Silica;
(5) von 0 bis 1 ThK eines Kobaltsalzes; und
(6) von 0,5 bis 5 ThK N,N'-m-phenylen-bismaleimid;
wobei die Kautschukzusammensetzung frei von Harzen und Silan-Kupplungsmitteln ist.

2. Erzeugnis nach Anspruch 1, wobei die Kautschukzusammensetzung frei von Kobaltsalz ist.

3. Erzeugnis nach Anspruch 1 oder 2, wobei die Kautschukzusammensetzung ferner eine Auswahl an Vulkanisationsmitteln umfasst, die von 2 bis 10 phr Schwefel, von 1 bis 12 phr Zinkoxid, von 0,5 bis 2 phr eines Sulfenamid-Beschleunigers, und von 0 bis 0,5 phr Zinkdimethyldithiocarbamat umfasst.

4. Erzeugnis nach einem der vorhergehenden Ansprüche, wobei die Kautschukzusammensetzung, die mit dem Kord in Kontakt kommt, mindestens 90 ThK oder mindestens 95 ThK oder 100 ThK Naturkautschuk oder synthetisches Polyisopren umfasst.

5. Erzeugnis nach einem der vorstehenden Ansprüche, wobei die Kautschukzusammensetzung, die mit dem Kord in Kontakt kommt, von 5 ThK bis 30 ThK, vorzugsweise von 10 bis 25 ThK oder von 15 bis 25 ThK, des mindestens einen zusätzlichen Kautschuks, der aus der Gruppe ausgewählt ist, die aus Polybutadienkautschuk und Styrol-Butadien-Kautschuk besteht.

6. Erzeugnis nach einem der vorstehenden Ansprüche 1 bis 5, wobei die Kautschukzusammensetzung, die mit dem Kord in Kontakt kommt, von 6 bis 10 ThK Silica umfasst.

7. Erzeugnis nach einem der vorstehenden Ansprüche, wobei die Kautschukzusammensetzung, die mit dem Kord in Kontakt kommt, von 35 bis 70 ThK Ruß umfasst.

8. Erzeugnis nach einem der vorstehenden Ansprüche, wobei die Kautschukzusammensetzung frei von N,N'-m-xylylenbiscitraconimid ist.

9. Herstellungsgegenstand nach einem der vorhergehenden Ansprüche, wobei das Verstärkungskord mindestens ein Kord umfasst, das aus der Gruppe ausgewählt ist, die aus Stahlkorden und Polymerkorden besteht.

10. Erzeugnis nach einem der vorstehenden Ansprüche, wobei das Verstärkungskord ein Stahlkord ist.

11. Erzeugnis nach einem der vorhergehenden Ansprüche, wobei das Verstärkungskord mindestens ein Polymerkord umfasst, das aus der Gruppe ausgewählt ist, die aus Polyesterkorden, Polyamidkorden, Polyaramidkorden, Polyketonkorden und Rayonkorden besteht.

12. Erzeugnis nach einem der vorstehenden Ansprüche, wobei das Erzeugnis ein Luftreifen ist und die mit Korden verstärkte Kautschukkomponente eine Karkassenlage ist.

13. Erzeugnis nach mindestens einem der Ansprüche 1 bis 1 1, wobei das Erzeugnis ein Luftreifen ist und die mit Korden verstärkte Kautschukkomponente ein Gürtel ist.

14. Erzeugnis nach mindestens einem der Ansprüche 1 bis 11, in Form eines Luftreifens, eines Antriebsriemens, eines Schlauchs, einer Raupenkette, eines Innenreifens oder eines Förderbands.

## Revendications

1. Article manufacturé qui possède au moins un composant à base de caoutchouc renforcé par des câblés ; dans lequel l'article comprend :
(A) un câblé de renforcement ; et
(B) une composition de caoutchouc qui entre en contact avec le câblé ; dans lequel la composition de caoutchouc comprend :
(1) de 70 à 100 phr d'au moins un caoutchouc de polyisoprène qui est choisi parmi le groupe constitué par du caoutchouc naturel ou du polyisoprène synthétique ;
(2) de 0 à 30 phr d'au moins un caoutchouc supplémentaire qui est choisi parmi le groupe constitué par du caoutchouc de polybutadiène et du caoutchouc de styrène-butadiène ;
(3) de 20 à 80 phr de noir de carbone ;
(4) de 2 à 10 phr de silice ;
(5) de 0 à 1 phr d'un sel de cobalt ; et
(6) de 0,5 à 5 phr de N,N'-m-phénylène bismaléimide ;
dans lequel la composition de caoutchouc est exempte de résines et d'agents de couplage au silane.

2. Article manufacturé selon la revendication 1, dans lequel la composition de caoutchouc est exempte de sel de cobalt.

3. Article manufacturé selon la revendication 1 ou 2, dans lequel la composition de caoutchouc comprend en outre un assortiment d'agents de vulcanisation qui comprend de 2 à 10 phr de soufre, de 1 à 12 phr d'oxyde de zinc, de 0,5 à 2 phr d'un accélérateur de type sulfénamide, et de 0 à 0,5 phr de diméthyl dithiocarbamate de zinc.

4. Article manufacturé selon au moins une des revendications précédentes, dans lequel la composition de caoutchouc qui entre en contact avec le câblé comprend au moins 90 phr ou au moins 95 phr ou 100 phr de caoutchouc naturel ou de polyisoprène synthétique.

5. Article manufacturé selon au moins une des revendications précédentes, dans lequel la composition de caoutchouc qui entre en contact avec le câblé comprend de 5 phr à 30 phr, de préférence de 10 à 25 phr ou de 15 à 25 phr, dudit au moins un caoutchouc supplémentaire qui est choisi parmi le groupe constitué par du caoutchouc de polybutadiène et du caoutchouc de styrène-butadiène.

6. Article manufacturé selon au moins une des revendications précédentes 1 à 5, dans lequel la composition de caoutchouc qui entre en contact avec le câblé comprend de 6 à 10 phr de silice.

7. Article manufacturé selon au moins une des revendications précédentes, dans lequel la composition de caoutchouc qui entre en contact avec le câblé comprend de 35 à 70 phr de noir de carbone.

8. Article manufacturé selon au moins une des revendications précédentes, dans lequel la composition de caoutchouc est exempte du N,N'-m-xylylène biscitraconimide.

9. Article manufacturé selon au moins une des revendications précédentes, dans lequel le câblé de renforcement comprend au moins un câblé qui est choisi parmi le groupe qui est constitué par des câblés en acier et des câblés polymères.

10. Article manufacturé selon au moins une des revendications précédentes, dans lequel le câblé de renforcement est un câblé en acier.

11. Article manufacturé selon au moins une des revendications précédentes, dans lequel le câblé de renforcement comprend au moins un câblé polymère qui est choisi parmi le groupe qui est constitué par des câblés de polyester, des câblés de polyamide, des câblés de polyaramide, des câblés de polycétone et des câblés de rayonne.

12. Article manufacturé selon au moins une des revendications précédentes, dans lequel l'article manufacturé est un bandage pneumatique et le composant à base de caoutchouc renforcé par des câblés est une nappe de carcasse.

13. Article manufacturé selon au moins une des revendications 1 à 11, dans lequel l'article manufacturé est un bandage pneumatique et le composant à base de caoutchouc renforcé par des câblés est une ceinture.

14. Article manufacturé selon au moins une des revendications 1 à 11, sous la forme d'un bandage pneumatique, d'une courroie de transmission, d'un tuyau flexible, d'une chenille, d'une chambre à air ou d'une courroie transporteuse.
